# EUROPÄISCHE PATENTSCHRIFT

(11) **EP 2 960 499 B1**
(45) Veröffentlichungstag und Bekanntmachung des Hinweises auf die Patenterteilung: **28.12.2016**
(21) Anmeldenummer: 15167006.4
(22) Anmeldetag: 08.05.2015
(51) Int. Cl.: F04B 13/00, F04B 17/04, F04B 43/04, F01N 3/10, F01N 3/20

(54) **PUMPVORRICHTUNG**
PUMPING DEVICE
DISPOSITIF DE POMPAGE

(30) Priorität: 12.06.2014 DE 102014211281
(43) Veröffentlichungstag der Anmeldung: 30.12.2015
(73) Patentinhaber: ROBERT BOSCH GMBH, 70442 Stuttgart (DE)
(72) Erfinder: Boehland, Peter, 71672 Marbach (DE)

(56) Entgegenhaltungen:
- EP-A1- 1 878 920
- DE-A1-102010 039 048
- DE-A1-102012 211 875
- DE-B3-102008 049 900
- US-A1- 2007 236 089

## Beschreibung

Die Erfindung betrifft eine Pumpvorrichtung, insbesondere eine Pumpvorrichtung zum Einspritzen eines fluiden Reduktionsmittels in den Abgasstrang eines Verbrennungsmotors.

### Stand der Technik

Bei Verbrennungskraftmaschinen für Kraftfahrzeuge und Hybrid-Fahrzeuge ist u. a. der in den Abgasen von selbstzündenden Verbrennungskraftmaschinen ("Dieselmotoren") enthaltene Schadstoff NOₓ zu reduzieren. Eine dazu geeignete Methode ist das sogenannte SCR-Verfahren (SCR = selektive katalytische Reduktion), bei dem der Schadstoff NOₓ unter Zuhilfenahme eines flüssigen Reduktionsmittels, insbesondere Harnstoff bzw. einer Harnstoff-Wasser-Lösung (AdBlue ®), zu N₂ und H₂O reduziert wird.

Das flüssige Reduktionsmittel wird in der Regel von einer nahe an einem Tank, im dem das Reduktionsmittel gespeichert ist, angeordneten Förderpumpe durch eine Fluidleitung von diesem Bevorratungstank zu einem Dosiermodul gefördert. Das Dosiermodul besitzt ein aktives elektrisches Ventil, das angesteuert wird, um die gewünschte Reduktionsmittelmenge dosiert in den Abgastrakt der selbstzündenden Verbrennungskraftmaschine einzubringen.

Für eine gute Vermischung des Reduktionsmittels mit den Abgasen ist eine gute Zerstäubung des Reduktionsmittels erforderlich. Diese kann insbesondere durch einen hohen Einspritzdruck erreicht werden.

Um einen hohen Einspritzdruck zu erreichen, wird eine Einspritzpumpe verwendet, die den Vorförderdruck der Förderpumpe von ca. 5 bar auf einen Einspritzdruck von mehr als 15 bar erhöht. Dazu wird das einzuspritzende Medium in einem Pumpenraum durch einen Kolben oder eine Membran verdichtet und über eine Ventildüse in den Abgastrakt eingespritzt. Der Kolben bzw. die Membran wird über einen Magnetanker bewegt. Bei einem Arbeitshub wird der Anker durch ein Magnetfeld angezogen und abrupt abgestoppt, wenn er an einen Anschlag, der an einem sogenannten Innenpol ausgebildet ist, anschlägt. Dadurch kommt es zu einem lauten Anschlaggeräusch und der Druck im Pumpenraum sinkt schnell und stark ab. Eine Pumpvorrichtung mit den Merkmalen des Oberbegriffs von Anspruch 1 ist aus Dokument DE 10 2008 049 900 B3 bekannt.

Es ist daher eine Aufgabe der Erfindung, eine Pumpvorrichtung, insbesondere eine Pumpvorrichtung zum Einspritzen eines fluiden Reduktionsmittels in den Abgasstrang eines Verbrennungsmotors zur Verfügung zu stellen, die einen solchen abrupten Druckabfall vermeidet und die ein reduziertes Betriebsgeräusch hat.

### Offenbarung der Erfindung

Eine Pumpvorrichtung, insbesondere zum Einspritzen eines fluiden Reduktionsmittels in den Abgasstrang eines Verbrennungsmotors, hat einen Magnetkern; eine innerhalb des Magnetkerns ausgebildete Spule; einen innerhalb des Magnetkerns ausgebildeten Anker, der durch Bestromen der Spule von einer Ausgangsposition in eine Arbeitsposition bewegbar ist; und einen innerhalb des Magnetkerns ausgebildeten Innenpol, der so angeordnet ist, dass er als Anschlag für den Anker wirkt. Erfindungsgemäß ist der Innenpol in der Bewegungsrichtung des Ankers beweglich gelagert. Dadurch ist der Innenpol in der Lage, sich gemeinsam mit dem Anker zu bewegen und so den Anschlag des Ankers an den Innenpol zu dämpfen. Auf diese Weise werden sowohl das Anschlaggeräusch als auch der Verschleiß gegenüber einer herkömmlichen Pumpvorrichtung deutlich reduziert. Darüber hinaus kann ein abrupter bfall des Förderdrucks der Pumpvorrichtung am Ende des Arbeitshubes verhindert werden.

In einer Ausführungsform ist der Anker mit einem Bolzen ausgebildet oder mechanisch mit einem Bolzen verbunden. Der Bolzen wirkt auf ein Pumpelement ein, so dass das Volumen eines Pumpenraumes durch Bewegen des Pumpelements, das insbesondere als Kolben oder Membran ausgebildet sein kann, variierbar ist, um einen Pumpvorgang durchzuführen. Über einen Bolzen kann der Anker besonders effektiv auf das Pumpelement einwirken, um eine Pumpbewegung zu realisieren.

In einer Ausführungsform ist der Innenpol um den Umfang des Bolzens angeordnet. Dies ermöglicht eine besonders effiziente und zuverlässige Führung des Bolzens und damit des Ankers in Bezug auf den Innenpol.

In einer Ausführungsform ist an dem Pumpelement ein Anschlag für den Bolzen und/oder den Innenpol vorgesehen. Auf diese Weise können der Bolzen und/oder der Innenpol an das Pumpelement anschlagen, ohne es zu beschädigen.

In einer Ausführungsform stützen sich der Innenpol und/oder der Anker an dem Magnetkern ab. Dies ermöglicht einen besonders kompakten und gleichzeitig stabilen Aufbau der Pumpvorrichtung.

In einer Ausführungsform ist der Magnetkern mit wenigstens einer Innenpolführung ausgebildet, welche die Reibung zwischen dem Innenpol und dem Magnetkern reduziert, so dass sich der Innenpol besonders reibungsarm in dem Magnetkern bewegen kann.

In einer Ausführungsform ist der Magnetkern mit wenigstens einer Ankerführung ausgebildet, welche die Reibung zwischen dem Anker und dem Magnetkern reduziert, so dass sich der Anker besonders reibungsarm in dem Magnetkern bewegen kann.

In einer Ausführungsform weist der Magnetkern einen Anschlagbereich für den Innenpol auf, der insbesondere mit einem dämpfenden Element versehen ist, um den Anschlag des Innenpols an dem Magnetkern zu dämpfen und auf diese Weise sowohl die Geräuschentwicklung als auch den Verschleiß zu reduzieren.

In einer Ausführungsform ist der Anker in seiner Ausgangsposition von dem Innenpol beabstandet, so dass ein Spalt zwischen dem Anker und dem Innenpol vorhanden ist und sich der Anker über den vorgegebenen Abstand (Breite des Spalts) frei bewegen kann, bevor er an den Innenpol anschlägt und von diesem abgebremst wird.

### Kurze Beschreibung der Figuren:

Figur 1 zeigt eine Schnittdarstellung eines ersten Ausführungsbeispiels einer erfindungsgemäßen Pumpvorrichtung.
Die Figuren 2a - 2d, 3a und 3b zeigen die Ergebnisse einer mit einer Magnetfeldsimulation gekoppelten Hydrauliksimulation des Betriebs einer erfindungsgemäßen Pumpvorrichtung.

### Figurenbeschreibung

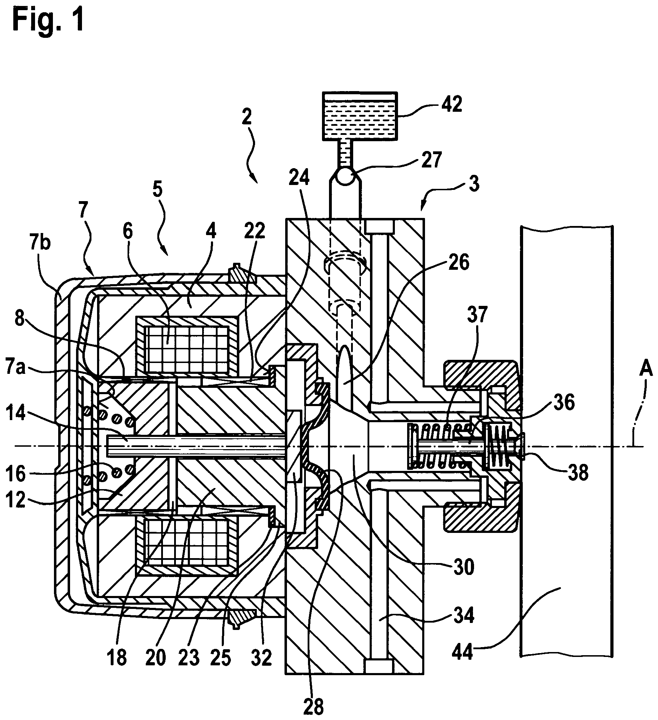

Figur 1 zeigt in einer Schnittdarstellung ein erstes Ausführungsbeispiel einer erfindungsgemäßen Pumpvorrichtung 2 mit einem auf der rechten Seite dargestellten Pumpbereich 3 und einem auf der linken Seite dargestellten Antriebsbereich 5.

Sowohl der Pumpbereich 3 als auch der Antriebsbereich 5 sind im Wesentlichen rotationssymmetrisch um eine Achse A ausgebildet, die in der Darstellung der Figur 1 in horizontaler Richtung von links nach rechts verläuft.

Der Pumpbereich 3 umfasst einen Pumpenraum 30, der über einen Zulauf 26 aus einem Fluidtank 42 mit einzuspritzenden Fluid befüllbar ist und der ausgangsseitig durch eine in einem Düsensitz 38 in Richtung der Achse A beweglich gelagerte Düsennadel 36 fluiddicht verschlossen ist.

Da die Pumpvorrichtung 2 bestimmungsgemäß an einem im Betrieb heißen Abgasstrang 44 eines in der Figur nicht gezeigten Verbrennungsmotors installiert ist, ist im Pumpbereich 3 ein Kühlkreis 34 vorgesehen, um die Pumpvorrichtung 2 zu kühlen und insbesondere von dem heißen Abgasstrang 44 an die Pumpvorrichtung 2 übertragene Wärme abzuführen.

Auf der vom Abgasstrang 44 abgewandten, in der Figur 1 links dargestellten, Seite der Pumpvorrichtung 2 ist der Antriebsbereich 5 der Pumpvorrichtung 2 ausgebildet.

In einem glockenförmigen Gehäuse 7, das doppelwandig mit einer inneren Wand 7a und einer äußeren Wand 7b ausgebildet ist und mit seiner offenen Seite an den Pumpbereich 3 angrenzt, ist ein ringförmig um die Achse A ausgebildeter Magnetkern 4 vorgesehen, in dem eine ebenfalls ringförmig um die Achse A ausgebildete elektrische Spule 6 angeordnet ist.

In radialer Richtung innerhalb der Spule 6 und des Magnetkerns 4 ist ein ebenfalls rotationssymmetrisch um die Achse A ausgebildeter Anker 12 vorhanden, der durch magnetische Kräfte, die beim Bestromen der Spule 6 erzeugt werden, entlang der Achse A bewegbar ist.

Der Anker 12 ist durch ein Federelement 16 in Richtung der Achse A elastisch an einem mittleren Bereich des Gehäuses 7 abgestützt.

Auf der der Achse A zugewandten Innenseite des Magnetkerns 4 ist eine Ankerführung 8 ausgebildet, die den Anker 12 in dem Magnetkern 4 führt und es ermöglicht, den Anker 12 reibungsarm parallel zur Achse A zu bewegen.

Ein rotationssymmetrisch um die Achse A ausgebildeter Bolzen 14, der sich entlang der Achse A vom Anker 12 in Richtung auf den Pumpbereich 3 erstreckt, ist in einem zentralen Bereich des Ankers 12 ausgebildet und/oder fest mit diesem verbunden. Die von dem Anker 12 abgewandte, in der Figur 1 rechts dargestellte, Stirnseite des Bolzens 14 liegt einem Anschlag 32 gegenüber, der in einem mittleren Bereich einer Membran 28, die den Pumpenraum 30 begrenzt, ausgebildet ist. Die Membran 28 ist daher durch Bewegen des Ankers 12 / Bestromen der Spule 6 über den Bolzen 14 entlang der Achse A bewegbar, um das Volumen des Pumpenraumes 30 zu variieren.

Rund um den Umfang des Bolzens 14 ist in einem Bereich zwischen dem Anker 12 und dem an der Membran 28 ausgebildeten Anschlag 32 ein Innenpol 20 ausgebildet, der über eine Innenpolführung 22 beweglich in dem Magnetkern 4 gelagert ist. Der Bolzen 14 ist in dem Innenpol 20 in Richtung der Achse A beweglich gelagert, so dass der Innenpol 20 sowohl gegenüber dem Magnetkern 4 als auch gegenüber dem Bolzen 14 parallel zur Achse A beweglich ist.

Bei nicht bestromter Spule 6 befindet sich der Anker 12 in seiner Ausgangsposition, in der Darstellung der Figur 1 auf der linken Seite. In dieser Position ist der Anker 12 in Richtung der Achse A vom Innenpol 20 beabstandet, so dass zwischen dem Anker 12 und dem Innenpol 20 ein Spalt 18 ausgebildet ist.

Der Innenpol 20 weist auf seiner der Membran 28 zugewandten und vom Anker 12 abgewandten, in der Figur 1 rechts dargestellten Seite entlang seines Umfangs einen sich in radialer Richtung nach außen erstreckenden Kragen 25 auf, der in der Ausgangsposition des Innenpols 20 an einen Innenpolanschlag 24 angrenzt, der an der dem Pumpbereich 3 zugewandten Stirnseite des Magnetkerns 4 ausgebildet ist. Der Innenpolanschlag 24 kann mit einem Dämpfungselement 23 ausgebildet sein, das ausgebildet ist, um das Anschlagen des Kragens 25 an den Magnetkern 4 zu dämpfen.

In der Figur 1 ist die Pumpvorrichtung 2 in ihrer Ausgangsposition gezeigt, in der die Spule 6 nicht bestromt ist, so dass sich der Anker 12, der Bolzen 14 und der Innenpol 20 in ihrer jeweiligen Ausgangsposition befinden, in der sie jeweils den größtmöglichen Abstand von der Membran 28 haben.

Um einen Pumpvorgang auszulösen, wird an die Spule 6 eine elektrische Spannung angelegt, so dass ein elektrischer Strom durch die Spule 6 fließt und von der Spule 6 ein elektromagnetisches Feld erzeugt wird, das eine anziehende magnetische Kraft zwischen dem Anker 12 und dem Innenpol 20 zur Folge hat. Da der Kragen 25 des Innenpols 20 an dem Innenpolanschlag 24 anliegt, kann sich der Innenpol 20 nicht in Richtung des Ankers 12 (in der Darstellung der Figur 1 "nach links") bewegen, vielmehr wird der Anker 12 von der magnetischen Kraft in Richtung des Innenpols 20 ("nach rechts") in eine Arbeitsposition gezogen.

Aufgrund dieser Bewegung des Ankers 12 ("nach rechts") wird auch der Bolzen 14 in Richtung des Pumpbereichs 3 ("nach rechts") bewegt. Der Bolzen 14 wirkt mechanisch auf den Anschlag 32 ein und drückt so die Membran 28 in Richtung der Düsennadel 36 ("nach rechts"), wodurch das Volumen des Pumpenraumes 30 reduziert wird.

Ein im Zulauf 26 zwischen dem Fluidtank 42 und dem Pumpenraum 30 ausgebildetes Ein-Wege-Ventil 27 verhindert, dass Fluid aus dem Pumpenraum 30 in den Fluidtank 42 zurück fließt. Daher erhöht sich aufgrund des reduzierten Volumens der Druck im Pumpenraum 30, bis der Öffnungsdruck der Düsennadel 36 erreicht ist, sich die Düsennadel 36 gegen die Kraft des Düsennadel-Federelements 37 aus dem Düsensitz 38 hebt und das Fluid aus dem Pumpenraum 30 in den Abgasstrang 44 eingespritzt wird. Aufgrund des von dem Pumpbereich 3 wie beschrieben erzeugten hohen Fluiddrucks im Pumpenraum 30 und des kleinen Öffnungshubes der Düsennadel 36 wird das Fluid dabei, wie gewünscht, fein zerstäubt, so dass es sich gut mit den durch den Abgasstrang 44 strömenden Abgasen vermischt.

Der Anker 12 bewegt sich im Folgenden weiter ("nach rechts"), bis er die Breite des Spaltes 18, der in der Ausgangsposition zwischen dem Anker 12 und dem Innenpol 20 ausgebildet ist, vollständig überwunden hat und an die dem Anker 12 zugewandte Stirnseite des Innenpols 20 anschlägt. Da der Innenpol 20 entlang der Achse A beweglich gelagert ist, bewegen sich der Anker 12 und der Innenpol 20 in der Folge gemeinsam weiter in Richtung auf die Membran 28 und den Pumpenraum 30 ("nach rechts"). Diese gemeinsame Bewegung wird schließlich elastisch abgebremst, da das Fluid im Pumpenraum 30, dass nur durch die kleine Öffnung am Düsensitz 38 austreten kann, eine dämpfende Wirkung hat.

Nach dem Abschalten der Spannung an bzw. des Stromes durch die Spule 6 fällt der Druck im Pumpenraum 30 ab, da Fluid nach dem Öffnen der Düsennadel 36, wie zuvor beschrieben, durch den Düsensitz 38 aus dem Pumpenraum 30 in den Abgasstrang 44 geströmt ist.

Sobald der Druck im Pumpenraum 30 unter den Öffnungsdruck der Düsennadel 36 abgefallen ist, wird die Düsennadel 36 von dem Düsennadel-Federelement 37 wieder in ihre verschließende Ausgangsposition ("nach links") bewegt. Gleichzeitig schiebt der noch verbliebene, nunmehr reduzierte, Druck im Pumpenraum 30 die Membran 28 zurück in ihre Ausgangsposition ("nach links"), und über den Anschlag 32 und den Kolben 14 werden auch der Innenpol 20 und der Anker 12 zurück in ihre jeweilige Ausgangsposition ("nach links") bewegt, wodurch sich der Druck im Pumpenraum 30 noch weiter reduziert.

Sobald der Druck im Pumpenraum 30 so weit abgefallen ist, dass der Zulaufdruck erreicht ist, öffnet das Rückschlagventil 27 im Zulauf 26, und der Pumpenraum 30 wird über den Zulauf 26 mit Fluid aus dem Fluidtank 42 aufgefüllt. Durch die auf diese Weise zunehmende Fluidmenge im Pumpenraum 30 wird das Volumen des Pumpenraumes 30 weiter vergrößert und die Membran 28 schiebt den Innenpol 20 und den Anker 12 weiter in Richtung ihrer Ausgangsposition ("nach links"), bis der Kragen 25 des Innenpols 20 wieder am Innenpolanschlag 24 anliegt.

Der Anker 12 bewegt sich aufgrund seiner Massenträgheit noch weiter in Richtung auf eine der Membran 28 gegenüberliegende innere Stirnwand 7a des Gehäuses 7 und wird schließlich durch das elastische Element 16, das zwischen dem Anker 12 und der Stirnwand 7a des Gehäuses 7 angeordnet ist, sanft abgebremst, bis sich alle beweglichen Elemente der Pumpvorrichtung 2, insbesondere der Anker 12, der Bolzen 14, der Innenpol 20 und die Membran 28, wieder in ihrer jeweiligen Ausgangsposition befinden.

Die Rückwärtsbewegung hat eine deutlich geringere Geschwindigkeit als die Einspritzbewegung, so dass das Anschlagen des Kragens 25 des Innenpols 20 an den Innenpolanschlag 24 in der Rückwärtsbewegung mit einer deutlich geringeren Geschwindigkeit als das Anschlagen des Ankers 12 an den Innenpol 20 während des Einspritzvorgangs erfolgt. Daher ist dieses Anschlagen bei der Rückwärtsbewegung sanfter und leiser und beansprucht das Material weniger. Der Innenpolanschlag 24 kann darüber hinaus mit einem zusätzlichen elastischen Dämpfer 23 ausgebildet sein, um das Anschlaggeräusch des Innenpols 20 an den Magnetkern 4 noch weiter zu reduzieren und so einen besonders geräuscharmen Betrieb der Pumpvorrichtung 2 zu ermöglichen.

Sobald der Pumpenraum 30 über den Zulauf 26 wieder vollständig mit Fluid gefüllt ist, kann durch erneutes Bestromen der Spule 6 der nächste Einspritzvorgang ausgelöst werden.

In einer erfindungsgemäßen Pumpvorrichtung 2 sind das Anschlagen des Bolzens 14 und des Innenpols 20 an den Anschlag 32 der Membran 28 vom Gehäuse 5 entkoppelt, so dass die dabei erzeugten Geräusche nicht an das Gehäuse übertragen werden und die Pumpvorrichtung sehr leise betrieben werden kann.

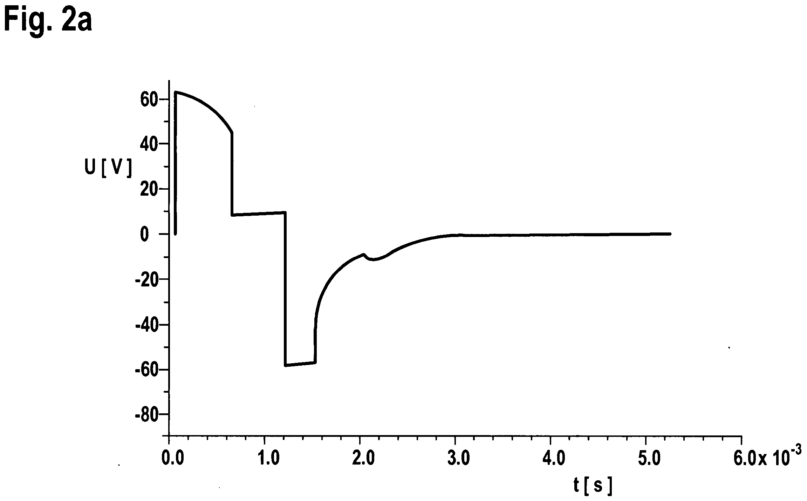

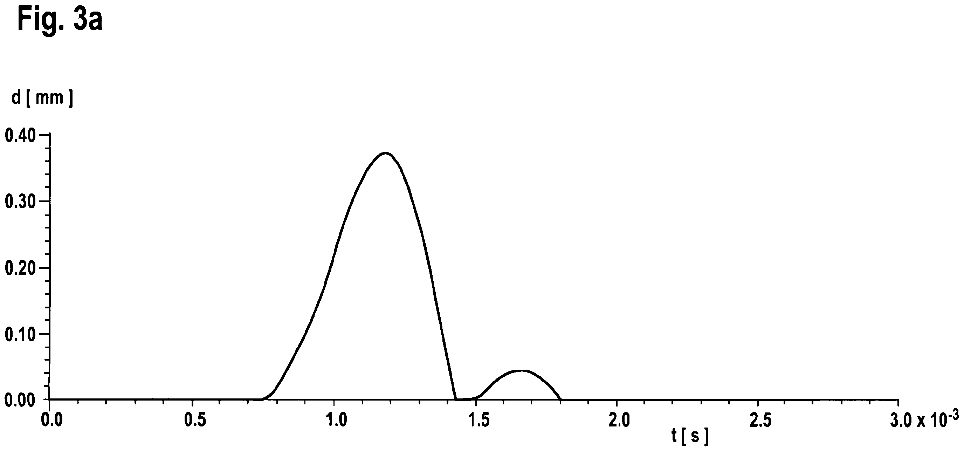

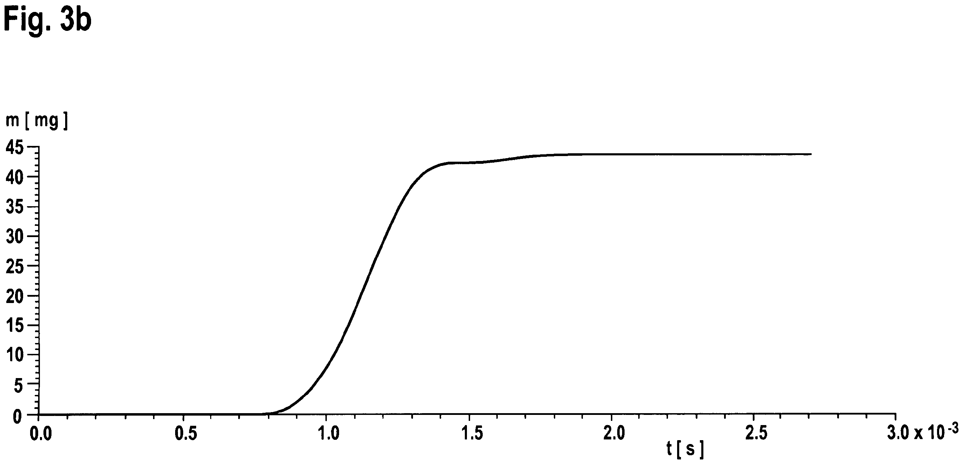

Die Figuren 2a - 2d, 3a und 3b zeigen die Ergebnisse einer mit einer Magnetfeldsimulation gekoppelten Hydrauliksimulation eines Ausführungsbeispiels einer erfindungsgemäßen Pumpvorrichtung.

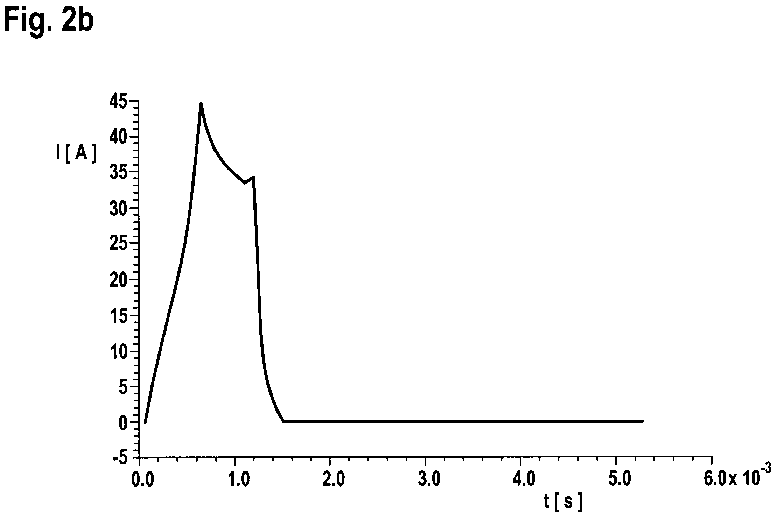

In den Figuren 2a und 2b sind die an der Spule 6 anliegende Spannung U bzw. der durch die Spule 6 fließende Strom I als Funktion der Zeit t aufgetragen. Die negative Spannung im Bereich zwischen 1,0 ms und 2,0 ms ergibt sich aus der durch die Bewegung des Ankers 12 in der Spule 6 nach dem Abschalten der äußeren Spannung in der Spule 6 induzierten Induktionsspannung.

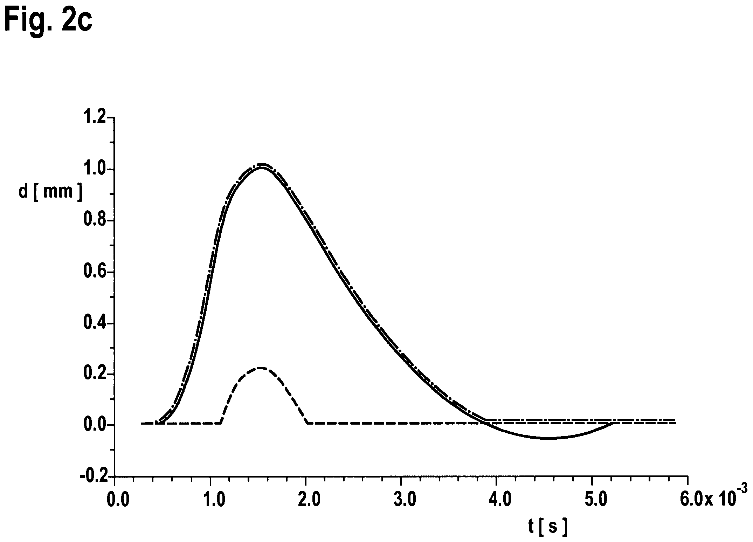

In der Figur 2c sind die zuvor beschriebenen zeitlichen Verläufe der Hübe des Ankers 12 (durchgezogene Linie), der Membran 28 (Strich-Punkt-Linie) und des Innenpols 20 (gestrichelte Linie) dargestellt. Der beschriebene Hub des beweglichen Innenpols 20, der zusammen mit der maximaler Auslenkung des Ankers 12 und der Membran 28 auftritt, ist im Zeitraum zwischen 1,0 ms und 2,0 ms gut zu erkennen. Im Zeitraum zwischen 4,0 ms und 5,0 ms ist zu erkennen, wie der Anker 12 aufgrund seiner Trägheit über seine Ausgangsposition (d = 0) hinausschießt (d < 0), bevor er etwa bei t = 5,2 ms in seiner Ausgangsposition zur Ruhe kommt.

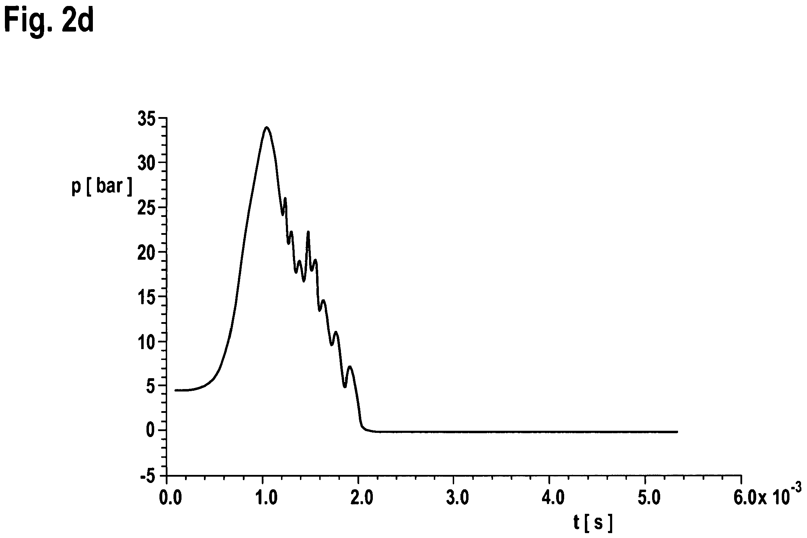

Figur 2d zeigt den Druck im Pumpenraum 30 als Funktion der Zeit t. Der Druck steigt bis zum Anschlag des Ankers 12 am Innenpol 20 (t=1,0 ms) auf seinen Maximalwert von etwa 35 bar an, bis die Düsennadel 38 öffnet und der Druck im Pumpenraum 30 durch das Ausströmen des Fluids wieder abfällt.

Auch in einer erfindungsgemäßen Pumpvorrichtung 2 wird der Anker 12 beim Anschlagen an den Innenpol 20 abgebremst. Da der Innenpol 20 erfindungsgemäß nachgibt, erfolgt das Abbremsen aber nicht so abrupt wie bei einem feststehenden Innenpol 20, wie er im Stand der Technik vorhanden ist. Dadurch ist der Druckabfall im Pumpenraum langsamer und das Anschlaggeräusch ist deutlich geringer als bei einer herkömmlichen Pumpvorrichtung.

Figur 3a zeigt den Hub h der Düsennadel 36 beim Einspritzvorgang als Funktion der Zeit t mit einem Preller (1,5 ms < t < 1,8 ms) und Figur 3b veranschaulicht die aus der Einspritzvorrichtung austretende Einspritzmenge m als Funktion der Zeit t.

## Patentansprüche

1. Pumpvorrichtung (2), insbesondere zum Einspritzen eines fluiden Reduktionsmittels in den Abgasstrang (44) eines Verbrennungsmotors, mit
einem Magnetkern (4);
einer Spule (6);
einem Anker (12), der durch Bestromen der Spule (6) von einer Ausgangsposition in eine Arbeitsposition bewegbar ist; und
einem innerhalb des Magnetkerns (4) ausgebildeten Innenpol (20), der so angeordnet ist, dass er als Anschlag für den Anker (12) wirkt, wobei der Innenpol (20) in der Bewegungsrichtung des Ankers (12) beweglich gelagert ist;
**dadurch gekennzeichnet, dass** der Magnetkern (4) einen Anschlagbereich (24) für den Innenpol (20) aufweist, wobei im Anschlagbereich (24) ein dämpfendes Element (23) vorgesehen ist.

2. Pumpvorrichtung (2) nach Anspruch 1, wobei der Anker (12) mit einem Bolzen (14) verbunden oder ausgebildet ist, der auf ein Pumpelement (28) einwirkt.

3. Pumpvorrichtung (2) nach Anspruch 2, wobei der Innenpol (20) um den Umfang des Bolzens (14) angeordnet ist.

4. Pumpvorrichtung (2) nach Anspruch 2 oder 3, wobei an dem Pumpelement (28) ein Anschlag für den Bolzen (14) und/oder den Innenpol (20) vorgesehen ist.

5. Pumpvorrichtung (2) nach einem der vorangehenden Ansprüche, wobei sich der Innenpol (20) und/oder der Anker (12) an dem Magnetkern (4) abstützen.

6. Pumpvorrichtung (2) nach Anspruch 5, wobei der Magnetkern (4) mit wenigstens einer Innenpolführung (22) zum Führen des Innenpols (20) ausgebildet ist.

7. Pumpvorrichtung (2) nach Anspruch 5 oder 6, wobei der Magnetkern (4) mit wenigstens einer Ankerführung (8) zum Führen des Ankers (12) ausgebildet ist.

8. Pumpvorrichtung (2) nach einem der vorangehenden Ansprüche, wobei der Anker (12) in seiner Ausgangsposition von dem Innenpol (20) beabstandet ist, so dass zwischen dem Anker (12) und dem Innenpol (20) ein Spalt (18) ausgebildet ist.

## Claims

1. Pump device (2), in particular for injecting a fluid reducing agent into the exhaust tract (44) of an internal combustion engine, having
a magnet core (4);
a coil (6);
an armature (12) which can, by energization of the coil (6), be moved from an initial position into a working position; and
an inner pole (20) which is formed within the magnet core (4) and which is arranged so as to act as an abutment for the armature (12), wherein the inner pole (20) is mounted so as to be movable in the movement direction of the armature (12);
**characterized in that** the magnet core (4) has an abutment region (24) for the inner pole (20), wherein a damping element (23) is provided in the abutment region (24).

2. Pump device (2) according to Claim 1, wherein the armature (12) is connected or formed with a pin (14) which acts on a pump element (28).

3. Pump device (2) according to Claim 2, wherein the inner pole (20) is arranged around the circumference of the pin (14).

4. Pump device (2) according to Claim 2 or 3, wherein an abutment for the pin (14) and/or the inner pole (20) is provided on the pump element (28).

5. Pump device (2) according to one of the preceding claims, wherein the inner pole (20) and/or the armature (12) are/is supported on the magnet core (4).

6. Pump device (2) according to Claim 5, wherein the magnet core (4) is formed with at least one inner-pole guide (22) for guiding the inner pole (20).

7. Pump device (2) according to Claim 5 or 6, wherein the magnet core (4) is formed with at least one armature guide (8) for guiding the armature (12).

8. Pump device (2) according to one of the preceding claims, wherein the armature (12) is, in its initial position, spaced apart from the inner pole (20) such that a gap (18) is formed between the armature (12) and the inner pole (20).

## Revendications

1. Dispositif de pompage (2), en particulier pour l'injection d'un agent réducteur fluide dans la ligne d'échappement (44) d'un moteur à combustion interne, comprenant
un noyau magnétique (4) ;
une bobine (6) ;
un induit (12) qui peut être déplacé par alimentation électrique de la bobine (6) d'une position de départ dans une position de travail ; et
un pôle interne (20) réalisé à l'intérieur du noyau magnétique (4), qui est disposé de telle sorte qu'il agisse en tant que butée pour l'induit (12), le pôle interne (20) étant supporté de manière déplaçable dans la direction de déplacement de l'induit (12) ;
**caractérisé en ce que** le noyau magnétique (4) présente une région de butée (24) pour le pôle interne (20), un élément d'amortissement (23) étant prévu dans la région de butée (24).

2. Dispositif de pompage (2) selon la revendication 1, dans lequel l'induit (12) est connecté ou réalisé avec un boulon (14) qui agit sur un élément de pompe (28).

3. Dispositif de pompage (2) selon la revendication 2, dans lequel le pôle interne (20) est disposé autour de la périphérie du boulon (14).

4. Dispositif de pompage (2) selon la revendication 2 ou 3, dans lequel une butée pour le boulon (14) et/ou le pôle interne (20) est prévue au niveau de l'élément de pompe (28).

5. Dispositif de pompage (2) selon l'une quelconque des revendications précédentes, dans lequel le pôle interne (20) et/ou l'induit (12) s'appuient sur le noyau magnétique (4).

6. Dispositif de pompage (2) selon la revendication 5, dans lequel le noyau magnétique (4) est réalisé avec au moins un guidage de pôle interne (22) pour guider le pôle interne (20).

7. Dispositif de pompage (2) selon la revendication 5 ou 6, dans lequel le noyau magnétique (4) est réalisé avec au moins un guidage d'induit (8) pour guider l'induit (12).

8. Dispositif de pompage (2) selon l'une quelconque des revendications précédentes, dans lequel l'induit (12) est espacé du pôle interne (20) dans sa position de départ, de telle sorte qu'entre l'induit (12) et le pôle interne (20) soit réalisée une fente (18).
